# EUROPEAN PATENT APPLICATION

(11) **EP 4 124 472 A1**
(43) Date of publication of application: **01.02.2023**
(21) Application number: 22186665.0
(22) Date of filing: 25.07.2022
(51) Int. Cl.: B60C 11/24, B60C 23/00

(54) **CUMULATIVE TIRE DAMAGE ESTIMATION SYSTEM, ARITHMETIC MODEL GENERATION SYSTEM, AND CUMULATIVE TIRE DAMAGE ESTIMATION METHOD**

(30) Priority: 30.07.2021 JP 2021125879
(71) Applicant: TOYO TIRE CORPORATION, Itami-shi, Hyogo 6640847 (JP)
(72) Inventor: NAKAJIMA, Sachiko, Itami-shi, Hyogo, 6640847 (JP); SEGAWA, Masahiro, Itami-shi, Hyogo, 6640847 (JP); SUGIMOTO, Hiroaki, Itami-shi, Hyogo, 6640847 (JP); YOSHINARI, Akio, Itami-shi, Hyogo, 6640847 (JP)
(74) Representative: Müller-Boré & Partner Patentanwälte PartG mbB

(57) **Abstract**

A cumulative tire damage estimation system (100) includes a vehicle information acquisition unit (12) and a damage calculation unit (13). The vehicle information acquisition unit (12) acquires a physical quantity measured by a sensor (72a, 72b) provided in a tire (7) mounted on a vehicle and information on a travel distance of the vehicle. The damage calculation unit (13) includes an arithmetic model (13b) for calculating a cumulative damage incurred by the tire (7) based on input information and calculates a cumulative damage of the tire (7) by inputting the physical quantity and the information on travel distance acquired by the vehicle information acquisition unit (12) to the arithmetic model (13b).

## Description

The present invention relates to a cumulative tire damage estimation system, an arithmetic model generation system, and a cumulative tire damage estimation method for estimating a cumulative damage incurred by a tire mounted on a vehicle.

Generally, the wear of a tire progresses in dependence on the traveling condition, travel distance, etc. Recently, apparatuses configured to display a pressure and a temperature measured by a sensor attached to a tire to measure the pressure and the temperature of the tire are commercialized.

Patent literature 1 discloses a related-art reform enabled/disabled determination system for determining whether or not a tire can be reformed. The reform enabled/disabled determination system includes: a use condition TSN calculation unit that calculates a use condition TSN indicating the amount of heat per a unit time in the heat history under the use condition of a tire, based on the scheduled speed of a vehicle, on which the tire is mounted, in a predetermined segment of travel and on a predetermined calculation formula; and a TTSN calculation unit that calculates TTSN indicating a sum of the amount of heat over the entire period of use; and a reform enabled/disabled determination unit that determines whether or not the tire can be reformed based on a result of comparison between TTSN and a predetermined threshold value K.

[Patent Literature 1] JP 2016-223857

The reform enabled/disabled determination system disclosed in patent literature 1 determines whether or not a tire can be reformed based on the amount of heat in the heat history under the use condition of the tire. The inventors have realized that properness of the detail of tire maintenance can be improved by considering the cumulative damage applied to the tire, based on information such as inflation pressure and temperature measured in the tire and travel distance, etc. of the vehicle.

The present invention addresses the above issue and a purpose thereof is to provide a cumulative tire damage estimation system, an arithmetic model generation system, and a cumulative tire damage estimation method capable of improving the properness of the detail of tire maintenance.

A cumulative tire damage estimation system according to an embodiment of the present invention includes: a vehicle information acquisition unit that acquires a physical quantity measured by a sensor provided in a tire mounted on a vehicle and information on a travel distance of the vehicle; a damage calculation unit that includes an arithmetic model for calculating a cumulative damage incurred by the tire based on input information and calculates a cumulative damage of the tire by inputting the physical quantity and the information on travel distance acquired by the vehicle information acquisition unit to the arithmetic model.

Another embodiment of the present invention relates to an arithmetic model generation system. The arithmetic model generation system includes: a vehicle information acquisition unit that acquires a physical quantity measured by a sensor provided in a tire mounted on a vehicle and information on a travel distance of the vehicle; a damage calculation unit that includes an arithmetic model for calculating a cumulative damage incurred by the tire based on input information and calculates a cumulative damage of the tire by inputting the physical quantity and the information on travel distance acquired by the vehicle information acquisition unit to the arithmetic model; and a learning processing unit that trains the arithmetic model by comparing a detail of maintenance of the tire determined based on the cumulative damage calculated by the damage calculation unit with a detail of maintenance obtained by inspecting the tire.

Another embodiment of the present invention relates to a cumulative tire damage estimation method. A cumulative tire damage estimation method includes: acquiring a physical quantity measured by a sensor provided in a tire mounted on a vehicle and information on a travel distance of the vehicle; calculating a cumulative damage of the tire by inputting the physical quantity and the information on travel distance acquired in the acquiring to an arithmetic model for calculating the cumulative damage incurred by the tire based on input information.

According to the present invention, it is possible to improve the properness of the detail of tire maintenance.
Fig. 1 is a block diagram showing a functional configuration of a cumulative tire damage estimation system according to the embodiment;
Fig. 2 is a block diagram showing a functional configuration of the vehicle-mounted measurement apparatus;
Fig. 3 is a chart showing predictor variables calculated by the pre-processing unit;
Fig. 4 is a schematic chart illustrating calculation of cumulative damage and learning in the arithmetic model;
Fig. 5 is a block diagram showing a functional configuration of an arithmetic model generation system; and
Fig. 6 is a flowchart showing a sequence of steps of arithmetic model generation performed by the arithmetic model generation system.

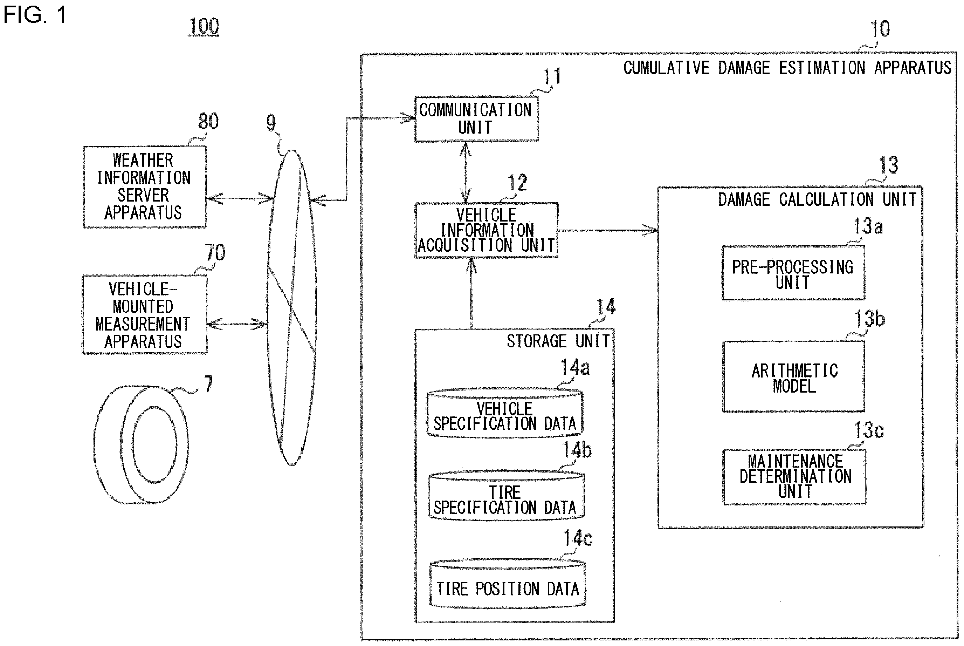

Hereinafter, the invention will be described based on a preferred embodiment with reference to Figs. 1 through 6. Identical or like constituting elements and members shown in the drawings are represented by identical symbols and a duplicate description will be omitted as appropriate. The dimension of members in the drawings shall be enlarged or reduced as appropriate to facilitate understanding. Those of the members that are not important in describing the embodiment are omitted from the drawings.

(Embodiment) Fig. 1 is a block diagram showing a functional configuration of a cumulative tire damage estimation system 100 according to the embodiment; The cumulative tire damage estimation system 100 is provided with a vehicle-mounted measurement apparatus 70 mounted on a vehicle, a weather information server apparatus 80, and a cumulative damage estimation apparatus 10 that estimates a cumulative damage of each tire 7 mounted on the vehicle.

The cumulative damage estimation apparatus 10 acquires, from the vehicle-mounted measurement apparatus 70 mounted on the vehicle, vehicle measurement information such as the speed, acceleration, and position information on the vehicle and tire measurement information measured in the tire 7 via a communication network 9 such as the Internet. Further, the cumulative damage estimation apparatus 10 acquires weather information from the weather information server apparatus 80. The cumulative damage estimation apparatus 10 estimates a cumulative damage of each tire 7 by performing an arithmetic operation based on the acquired information by using a learning-type arithmetic model.

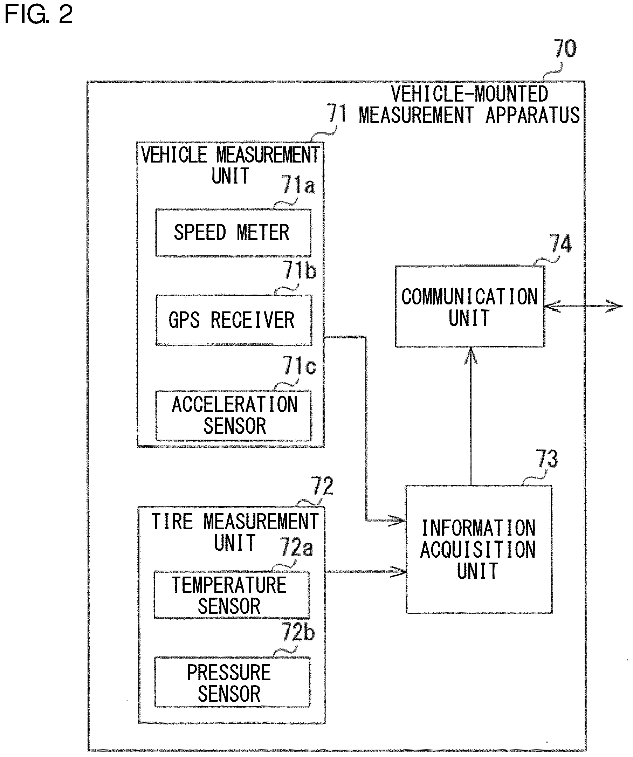

Fig. 2 is a block diagram showing a functional configuration of the vehicle-mounted measurement apparatus 70. The vehicle-mounted measurement apparatus 70 is provided with a vehicle measurement unit 71, a tire measurement unit 72, an information acquisition unit 73, and a communication unit 74. The parts in the vehicle-mounted measurement apparatus 70 can be implemented in hardware such as electronic devices or mechanical components exemplified by a CPU of a computer, and in software such as a computer program. The figure depicts functional blocks implemented by the cooperation of these elements. Therefore, it will be understood by those skilled in the art that the functional blocks may be implemented in a variety of manners by a combination of hardware and software.

The vehicle measurement unit 71 includes a speed meter 71a, a GPS receiver 71b, and an acceleration sensor 71c mounted on the vehicle. The speed meter 71a measures the speed of the vehicle. The GPS receiver 71b measures the current position information on the vehicle (latitude, longitude, and altitude). The acceleration sensor 71c measures the acceleration in the three axial directions of the vehicle.

The tire measurement unit 72 includes a temperature sensor 72a and a pressure sensor 72b. The temperature sensor 72a and the pressure sensor 72b are provided in the air valve, etc. of the tire 7 mounted on the vehicle or firmly wound around and secured to the wheel by a belt, etc. to measure the temperature and inflation pressure of the tire 7. The temperature sensor 72a may be provided in the inner liner of the tire 7, etc. An acceleration sensor separate from the acceleration sensor 71c mounted on the vehicle may be provided in the inner liner of the tire 7, etc.

The information acquisition unit 73 acquires the vehicle measurement information (speed, position information, acceleration, etc.) measured by the vehicle measurement unit 71, the tire measurement information (temperature, inflation pressure, etc. of the tire) measured by the tire measurement unit 72, tire identification information described later, etc. The information acquisition unit 73 associates measured time information or acquired time information with each measurement data item included in the vehicle measurement information and the tire measurement information. The information acquisition unit 73 transmits the vehicle measurement information and the tire measurement information from the communication unit 74 to the cumulative damage estimation apparatus 10 along with the time information associated with each measurement data item.

In the case an apparatus like a digital tachometer is mounted on the electronic controller of the vehicle or on the vehicle, the information acquisition unit 73 may acquire the speed, acceleration, position information, etc. collected by that apparatus. The communication unit 74 is communicably connected to the communication network 9 by wireless communication such as WiFi (registered trademark) and transmits the vehicle measurement information, tire measurement information, and time information acquired by the information acquisition unit 73 to the cumulative damage estimation apparatus 10 via the communication network 9.

Referring back to Fig. 1, the weather information server apparatus 80 provides weather information in various regions. The weather information provided by the weather information server apparatus 80 is information including precipitation, snow precipitation, snowfall, atmospheric temperature, hours of daylight, etc. in the regions. The cumulative damage estimation apparatus 10 acquires the weather information in a place where the vehicle is traveling from the weather information server apparatus 80.

The cumulative damage estimation apparatus 10 is provided with a communication unit 11, a vehicle information acquisition unit 12, a damage calculation unit 13, and a storage unit 14. The parts in the cumulative damage estimation apparatus 10 can be implemented in hardware such as electronic devices or mechanical components exemplified by a CPU of a computer, and in software such as a computer program. The figure depicts functional blocks implemented by the cooperation of these elements. Therefore, it will be understood by those skilled in the art that the functional blocks may be implemented in a variety of manners by a combination of hardware and software.

The communication unit 11 is communicably connected to the communication network 9 wirelessly or by wire and communicates with the communication unit 74 of the vehicle-mounted measurement apparatus 70. Further, the communication unit 11 communicates with the weather information server apparatus 80 via the communication network 9.

The vehicle information acquisition unit 12 acquires the vehicle measurement information (speed, position information, acceleration, etc.) and the tire measurement information (temperature, inflation pressure, etc., of the tire) transmitted from the vehicle-mounted measurement apparatus 70 mounted on the vehicle. The vehicle information acquisition unit 12 calculates and acquires the travel distance of the vehicle based on the vehicle measurement information.

The vehicle information acquisition unit 12 can calculate and acquire the travel distance based on the position information in the vehicle measurement information. Further, the travel distance of the vehicle may be calculated based on the speed data in the vehicle measurement information and the time data associated with the speed data. In other words, the travel distance of the vehicle can be calculated by multiplying the speed data arranged in a time sequence by the time difference elapsed until the next point of time. The speed of the vehicle used may be calculated from the travel distance of the vehicle based on the position information arranged in a time sequence and the interval of acquisition of the position information.

When the information on travel distance of the vehicle is provided from the vehicle or an external apparatus, etc. for vehicle management, the vehicle information acquisition unit 12 need not calculate the travel distance on its own and may acquire information on the travel distance from the vehicle or the external apparatus.

The vehicle information acquisition unit 12 outputs the acquired travel distance to the damage calculation unit 13. The vehicle information acquisition unit 12 outputs the acquired tire measurement information (temperature, inflation pressure, etc. of the tire) to the damage calculation unit 13.

In the case the damage calculation unit 13 estimates the cumulative damage of the tire based on an arithmetic model that uses the acceleration of the vehicle as an input element, the vehicle information acquisition unit 12 outputs the acceleration data in the vehicle measurement information to the damage calculation unit 13.

Further, the vehicle information acquisition unit 12 acquires, among vehicle specification data 14a, tire specification data 14b and tire position data 14c, the data used for estimation of the cumulative damage of the tire 7 from the storage unit 14 and outputs the acquired data to the damage calculation unit 13. The storage unit 14 is a storage apparatus comprised of a solid state drive (SSD), a hard disk, a CD-ROM, a DVD, etc. and stores data provided in advance as pertaining to various vehicles and specifications of the tire 7.

The vehicle specification data 14a includes information on vehicle performance, etc. including, for example, manufacturer, vehicle name, vehicle model code, vehicle weight, drive train, full length, vehicle width, vehicle height, maximum loading weight, etc. The tire specification data 14b includes information on tire performance including, for example, manufacturer, product name, tire size, tire width, tire profile, anti-wear performance, tire strength, static rigidity, dynamic rigidity, tire outer diameter, road index, manufacturing year/month/date, etc.

Further, the tire position data 14c includes the position, in the vehicle, of the tire for which the damage condition such as the wear amount is predicted, tire identification information, and information on the axle to which the tire is attached. The tire identification information is a serial number such as a manufacturing number attached to each tire to identify the tire. The tire identification information, the position of attachment of the tire, and the information on the axle may be stored in the storage unit 14 through an input operation of the worker mounting the tire on the vehicle.

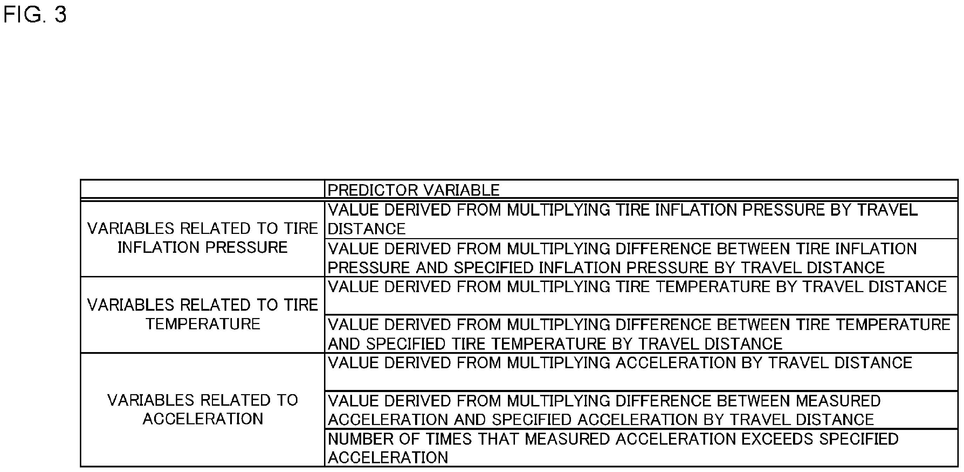

The damage calculation unit 13 is provided with a pre-processing unit 13a, an arithmetic model 13b, and a maintenance determination unit 13c. Fig. 3 is a chart showing predictor variables calculated by the pre-processing unit 13a. The pre-processing unit 13a calculates, as predictor variables related to tire inflation pressure, a value derived from multiplying the tire inflation pressure measured in the tire 7 by the travel distance and a value derived from multiplying a difference between the tire inflation pressure measured in the tire 7 and a specified inflation pressure specified for the tire 7 by the travel distance.

The pre-processing unit 13a calculates, as predictor variables related to tire temperature, a value derived from multiplying the tire temperature measured in the tire 7 by the travel distance and a value derived from multiplying a difference between the tire temperature measured in the tire 7 and a specified tire temperature (limit temperature of the tire, etc.) specified for the tire by the travel distance. The specified tire temperature may be the limit temperature tolerated by the rubber material of the tire in a range in which a tire burst, etc. does not occur, or the tire temperature specified according to the expected lifetime, or the average temperature of the tire 7 in a typical vehicle travel (e.g., traveling speed of 50 km/hour) .

In the case of the tire 7 mounted on the vehicle, the amount of damage incurred by the tire 7 varies depending on the relative magnitude of tire inflation pressure and tire temperature under different conditions of use and the distance traveled under those conditions of use. The amount of damage to the tire 7 may be considered to vary depending on a product of i) a difference between the tire inflation pressure measured in the tire 7 and the specified inflation pressure of the tire 7 and ii) the travel distance under that condition or on a product of iii) a difference between the tire temperature measured in the tire 7 and the specified tire temperature (tire limit temperature, etc.) specified for the tire and iv) the travel distance under that condition.

When the travel distance of the vehicle is large under the condition of a low tire inflation pressure, for example, the end portions of the tire 7 in the tire width direction, i.e., the shoulder portions in the tread of the tire 7 are easily worn and damaged. When the tire temperature is low, the volume of air in the tire 7 is decreased, and a phenomenon similar to that of the case of a low tire inflation pressure is caused. Further, the rigidity of the rubber material of the tire 7 itself changes depending on the tire temperature so that the amount of damage to the tire 7 such as wear changes in accordance with the travel distance of the vehicle under that condition.

The pre-processing unit 13a calculates, as predictor variables related to acceleration, a value derived from multiplying the acceleration measured in the tire 7 or the vehicle by the travel distance and a value derived from multiplying a difference between the acceleration measured in the tire 7 or the vehicle and the specified acceleration by the travel distance. The pre-processing unit 13a may calculate, as the predictor variable, the number of times that the acceleration measured in the tire 7 or the vehicle exceeds the specified acceleration. Further, the pre-processing unit 13a may calculate, as predictor variables related to acceleration, predictor variables for the acceleration in three axial directions. Alternatively, the pre-processing unit 13a may calculate predictor variable(s) for the acceleration in an arbitrary one axial direction or two axial directions.

When the tire 7 runs onto, for example, a curbstone of a road or when the tire 7 runs on a bumpy road surface, the tire 7 receives a great damage. These events can be identified by an excessively large acceleration measured in the tire 7 or the vehicle. The pre-processing unit 13a uses, as predictor variables for estimating the cumulative damage, the value derived from multiplying a difference between the measured acceleration and the specified acceleration by the travel distance and the number of times that the acceleration exceeds the specified acceleration.

The damage calculation unit 13 inputs the predictor variable calculated by the pre-processing unit 13a to the arithmetic model 13b to calculate the cumulative damage of the tire 7. The arithmetic model 13b is a learning-type model for calculating the cumulative damage of the tire 7 based on the input information. The maintenance determination unit 13c determines the detail of maintenance of the tire 7 based on the cumulative damage calculated by the arithmetic model 13b.

The detail of maintenance is categorized into, for example, need for rotation, retreading, disposal, etc. of the tire 7. The maintenance determination unit 13c determines the detail of maintenance by assessing the cumulative damage by comparing it with a plurality of reference values.

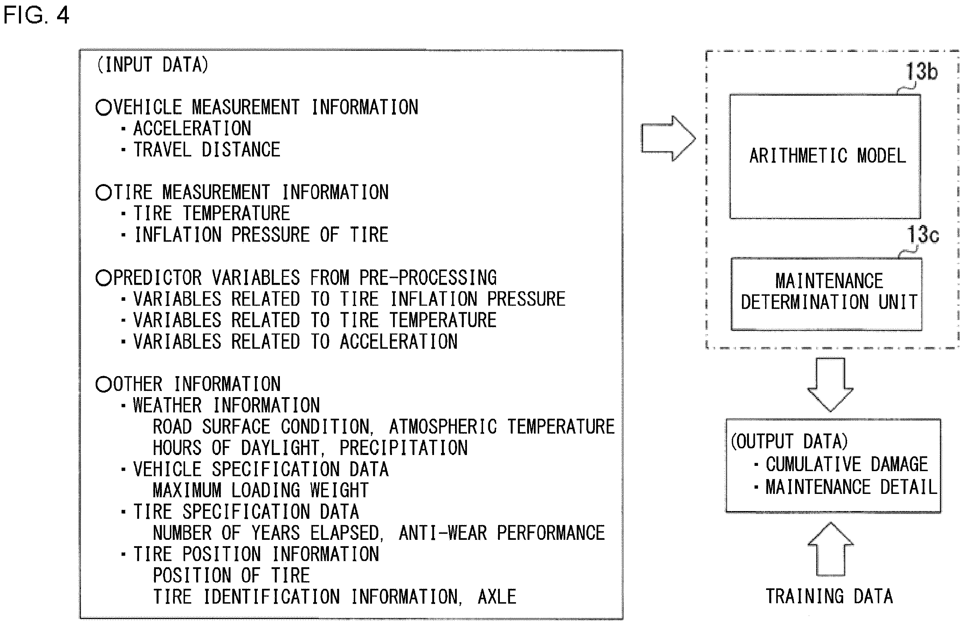

Fig. 4 is a schematic chart illustrating calculation of cumulative damage and learning in the arithmetic model 13b. The input data input to the arithmetic model 13b is generally categorized into vehicle measurement information, tire measurement information, predictor variables from pre-processing, and other information.

The input data related to vehicle measurement information includes the acceleration and travel distance of the vehicle. The travel distance is acquired by the vehicle information acquisition unit 12 as described above. The input data related to tire measurement information includes the temperature and inflation pressure of the tire 7. It will be assumed that the acceleration of the vehicle is used as input data input to the arithmetic model as appropriate.

The input data related to predictor variables from pre-processing are the predictor variables calculated by the pre-processing unit 13a and are calculated based on the tire inflation pressure, tire temperature, acceleration, and travel distance.

The input data from other information include the road surface condition, atmospheric temperature, hours of daylight, precipitation, etc. which are estimated based on the weather information, maximum loading weight of the vehicle included in the vehicle specification data 14a, the number of years elapsed, anti-wear performance, etc. of the tire 7 included in the tire specification data 14b. The number of years elapsed of the tire 7 is the number of years elapsed since the point of time when the tire 7 was manufactured. Tire wear index values, etc. derived from turning the anti-wear performance of different tread compositions into indices based on Lambourn abrasion tests, with the standard composition being defined as 100, are used to represent the anti-wear performance of the tire 7.

The input data from other information include the position of the tire 7 included in the tire position data 14c, tire identification information, and information on the axle. The maximum loading weight of the vehicle included in the vehicle specification data 14a is used to simplify the calculation. The load applied to each tire 7 varies depending on the way the cargo is carried. The load applied to each tire 7 is calculated by assuming that the empty vehicle weight for the respective axles and the maximum loading weight are applied to the center of gravity of the vehicle and by distributing the weight based on the distance from the center of gravity and the axle, et. Further, the load applied to each tire 7 that varies in real time may be calculated irrespective of the maximum loading weight, by attaching a dedicated sensor to the suspension of the vehicle body to continuously measure the load applied to each axle, total weight, and movable load.

A learning-type model such as a neural network is used as the arithmetic model 13b. The arithmetic model 13b is built by using a scheme such as a deep neural network (DNN) and a decision tree. Alternatively, the arithmetic model 13b may be built as a multiple linear regression model built in response to input information and may be generated by being trained.

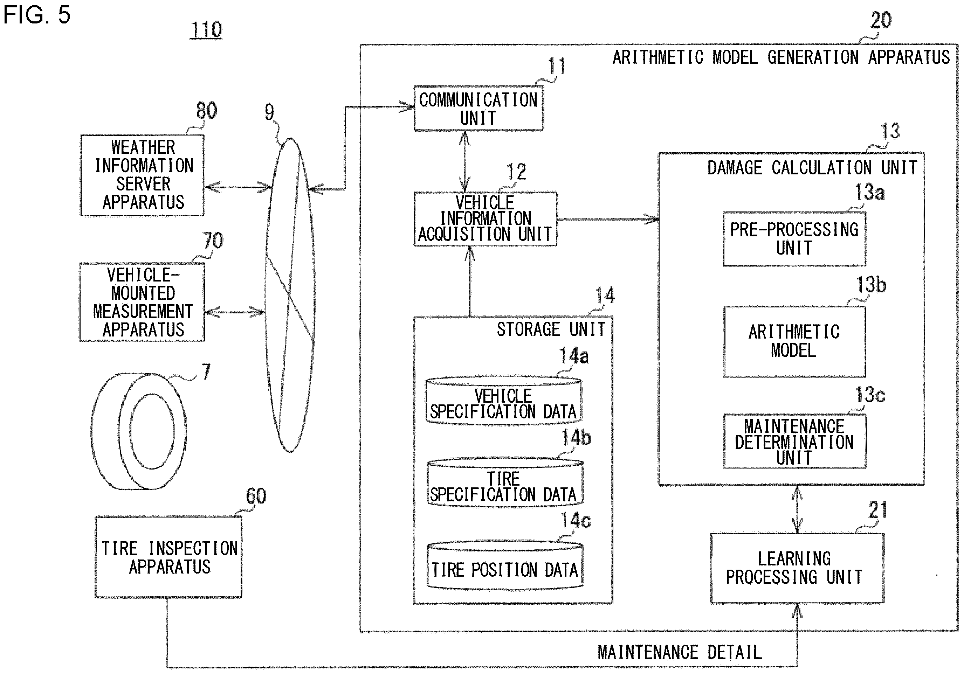

Fig. 5 is a block diagram showing a functional configuration of an arithmetic model generation system 110. In addition to the features of the cumulative tire damage estimation system 100, the arithmetic model generation system 110 is provided with a tire inspection apparatus 60 and an arithmetic model generation apparatus 20 including a learning processing unit 21.

The tire inspection apparatus 60 is an apparatus for inspecting the damage condition such as the wear amount of the tire 7. The detail of maintenance of the tire 7 is determined by the worker based on the result of inspection by the tire inspection apparatus 60. The tire inspection apparatus 60 directly measures the depth of a groove provided on a tread of the tire 7. Alternatively, the worker may measure the depth of each groove by a measuring instrument, a camera, visual inspection and the like, and the tire inspection apparatus 60 may store the measurement data input by the worker.

Further, the tire inspection apparatus 60 may have the function of measuring the structural state inside the tire 7 (e.g., separation between rubber materials) by X-ray or the function of measuring the physical property of a sample material collected from the tire 7 (e.g., peel force of the belt). A lower belt peel force means degradation in the durability of the tire. By providing these functions in the tire inspection apparatus 60, the worker can determine the detail of maintenance of the tire 7 more efficiently.

Given four tire grooves, for example, the tire inspection apparatus 60 measures the wear amount of the tire 7 at four locations in the width direction and, further, at three locations in the same groove spaced apart by, for example, 120°, in the circumferential direction. This causes uneven wear amount data in the width direction or circumferential direction of the tire to be also stored in the tire inspection apparatus 60. Since the diameter may change due to the wear of the tire, the tire inspection apparatus 60 may indirectly measure the depth of a groove by calculation from the travel distance and information on the revolutions and speed of the tire. In addition, direct measurement of the depth of a groove and calculation-based prediction of the depth from the travel distance and information on the revolutions and speed of the tire may be used in combination.

Those features of the arithmetic model generation apparatus 20 corresponding to the respective features of the cumulative damage estimation apparatus 10 have similar functions as those of the cumulative damage estimation apparatus 10, but the arithmetic model 13b has not been trained or is being trained.

The learning processing unit 21 trains the arithmetic model 13b based on the actual maintenance detail determined based on the result of inspection by the tire inspection apparatus 60. Referring to Fig. 4, the arithmetic model 13b is trained such that the arithmetic model 13b calculates the cumulative damage based on the input information. The output data comprised of the maintenance detail determined by the maintenance determination unit 13c is compared with the training data. The actual maintenance detail determined on the result of inspection by the tire inspection apparatus 60 is used as the training data. As described above, the maintenance detail is categorized into, for example, need for rotation, retreading, disposal, etc. of the tire 7. Further, the maintenance determination unit 13c may determine separation between rubber materials in the tire internal structure and determine reduction in the belt peel force with reference to a threshold value, based on the cumulative damage. The determination may be compared with the actual result of determination on separation and result of determination on reduction in the belt peel force with reference to a threshold value (training data) obtained by the tire inspection apparatus 60. The rotation, retreading, disposal, etc. of the tire 7 may be determined in accordance with the separation between rubber materials or the level of reduction in the belt peel force.

The learning processing unit 21 sets, in the arithmetic model 13b, various coefficients in the arithmetic steps for calculating the cumulative damage estimated by the arithmetic model 13b. The arithmetic model 13b is trained by repeatedly updating the model. The cumulative tire damage estimation system 100 estimates the cumulative damage of the tire 7 by using the arithmetic model 13b trained by the arithmetic model generation system 110 and determines the maintenance detail by using the maintenance determination unit 13c.

The learning processing unit 21 may cause the learning steps to proceed by modifying the reference value used in the determination in the maintenance determination unit 13c, etc. In that case, the maintenance determination unit 13c may be considered as a part of the arithmetic model 13b. The learning processing unit 21 may use a publicly known learning method such as gradient boosting. For validation of the arithmetic model 13b, a publicly known validation method such as random data sampling and cross validation can be used.

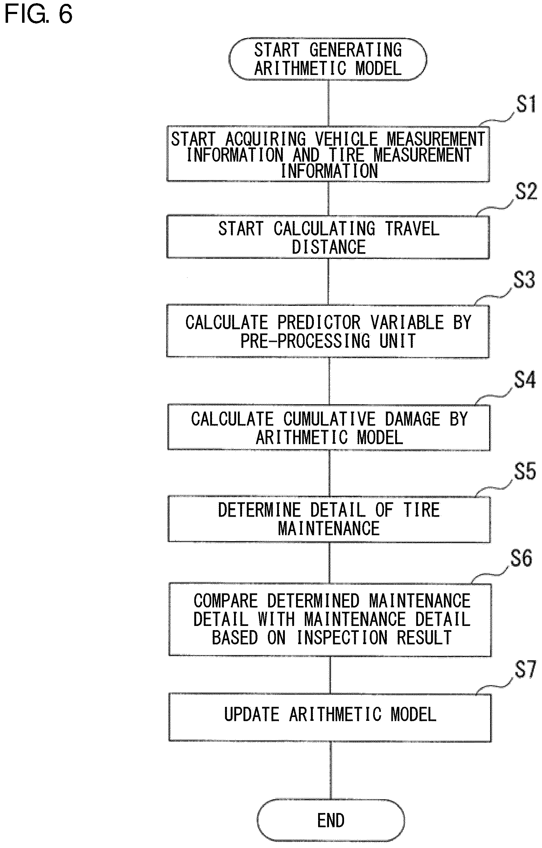

A description will now be given of the operation of the cumulative tire damage estimation system 100 and the arithmetic model generation system 110. Fig. 6 is a flowchart showing a sequence of steps of arithmetic model generation performed by the arithmetic model generation system 110. The vehicle information acquisition unit 12 starts acquiring the vehicle measurement information and the tire measurement information (S1). Further, the vehicle information acquisition unit 12 of the arithmetic model generation apparatus 20 reads, as other information, necessary information such as vehicle specification, tire specification, tire position, maximum loading weight of the vehicle, anti-wear performance of the tire, etc. from the storage unit 14 in step S1. The vehicle information acquisition unit 12 starts calculating the travel distance (S2) .

The pre-processing unit 13a of the damage calculation unit 13 calculates the predictor variable input to the arithmetic model 13b based on the tire inflation pressure, tire temperature, and travel distance (S3). As described above, the pre-processing unit 13a calculates the predictor variables related to tire inflation pressure, the predictor variables related to tire temperature, and the predictor variables related to acceleration.

The damage calculation unit 13 inputs the input data from the vehicle information acquisition unit 12 and the predictor variable calculated by the pre-processing unit 13a to the arithmetic model 13b and calculates and estimates the cumulative damage of the tire 7 by using the arithmetic model 13b (S4). The damage calculation unit 13 determines the detail of maintenance of the tire 7 by using the maintenance determination unit 13c based on the cumulative damage calculated by the arithmetic model 13b (S5).

The learning processing unit 21 compares the detail of maintenance of the tire 7 determined by the maintenance determination unit 13c with the actual maintenance detail (training data) determined based on the result of inspection by the tire inspection apparatus 60 (S6). The learning processing unit 21 updates the arithmetic model 13b based on the result of comparison in step S7 (S8) and terminates the process. The arithmetic model generation apparatus 20 updates the arithmetic model 13b by repeating these steps to improve the precision of estimation of cumulative damage of the tire 7 and properness of the determination on maintenance detail.

The cumulative tire damage estimation system 100 uses the trained arithmetic model 13b generated by the arithmetic model generation apparatus 20 to estimate the cumulative damage of the tire 7. The cumulative tire damage estimation system 100 estimates the cumulative damage of the tire 7 by performing step S1 through step S4 in the flowchart shown in Fig. 6 and determines the detail of maintenance of the tire 7 by performing the process in step S5.

By using the predictor variable based on the tire inflation pressure, tire temperature, and travel distance as the input data input to the arithmetic model 13b in the cumulative tire damage estimation system 100, the precision of estimation of cumulative damage to the tire 7 under the use condition and the properness of determination on maintenance detail are improved. Further, the cumulative tire damage estimation system 100 can provide the determined maintenance detail to the worker.

Similarly, the arithmetic model generation system 110 can generate the arithmetic model 13b characterized by a high precision of estimation of cumulative damage of the tire 7 and capable of determining the maintenance detail properly, by using the predictor variable based on the tire inflation pressure, tire temperature, and travel distance as the input data input to the arithmetic model 13b.

In the case the travel distance of the vehicle is measured minute by minute and provided from a vehicle-mounted apparatus, etc., the damage calculation unit 13 may use the provided travel distance in place of the calculation by the vehicle information acquisition unit 12.

The damage calculation unit 13 inputs the weather information to the arithmetic model 13b to calculate the cumulative damage. The weather information is exemplified by the road surface condition, atmospheric temperature, hours of daylight, precipitation, etc. By inputting these items of information to the arithmetic model 13b to calculate the cumulative damage, the precision of estimation of the cumulative damage of the tire 7 is further improved.

The pre-processing unit 13a of the damage calculation unit 13 calculates, as the predictor variable, an amount derived from multiplying a difference between the measured tire inflation pressure and the specified inflation pressure by the travel distance. The damage calculation unit 13 can improve the precision of estimation of the cumulative damage under the use condition of the tire 7 by inputting the predictor variable based on tire inflation pressure to the arithmetic model 13b to calculate the cumulative damage.

Further, the pre-processing unit 13a of the damage calculation unit 13 calculates, as the predictor variable, an amount derived from multiplying a difference between the measured tire temperature and the specified tire temperature by the travel distance. The damage calculation unit 13 can improve the precision of estimation of the cumulative damage under the use condition of the tire 7 by inputting the predictor variable based on tire temperature to the arithmetic model 13b to calculate the cumulative damage.

Further, the pre-processing unit 13a of the damage calculation unit 13 calculates, as the predictor variable, an amount derived from multiplying a difference between the acceleration measured in the tire 7 or the vehicle and the specified acceleration by the travel distance or the number of times that the acceleration measured in the tire 7 or the vehicle exceeds the specified acceleration. The cumulative tire damage estimation system 100 can improve the precision of estimation of the cumulative damage under the use condition of the tire 7 by using, as the predictor variable, the amount derived from multiplying a difference between the measured acceleration and the specified acceleration by the travel distance or the number of times that the measured acceleration exceeds the specified acceleration. The damage calculation unit 13 can improve the precision of estimation of the cumulative damage under the use condition of the tire 7 by inputting the acceleration measured in the tire 7 or the acceleration of the vehicle to the arithmetic model 13b to calculate the cumulative damage.

A description will now be given of the characteristics of the cumulative tire damage estimation system 100, the arithmetic model generation system 110, and the cumulative tire damage estimation method according to the embodiment. The cumulative tire damage estimation system 100 is provided with the vehicle information acquisition unit 12 and the damage calculation unit 13. The vehicle information acquisition unit 12 acquires the physical quantity measured by the sensor provided in the tire 7 mounted on the vehicle and the information on the travel distance of the vehicle. The damage calculation unit 13 includes the arithmetic model 13b for calculating the cumulative damage incurred by the tire 7 based on the input information and calculates the cumulative damage of the tire 7 by inputting the physical quantity and the information on travel distance acquired by the vehicle information acquisition unit 12 to the arithmetic model 13b. This allows the cumulative tire damage estimation system 100 to estimate the cumulative damage of the tire 7 by using the physical quantity measured in the tire 7 and the travel distance of the vehicle and to improve the properness of the determination on maintenance detail.

Further, the damage calculation unit 13 determines the detail of maintenance of the tire 7 based on the cumulative damage calculated by the arithmetic model 13b. This allows the cumulative tire damage estimation system 100 to provide the maintenance detail determined based on the estimated cumulative damage to the worker.

Further, the damage calculation unit 13 calculates the cumulative damage by inputting an amount derived from multiplying a difference between the measured tire inflation pressure and the specified inflation pressure by the travel distance to the arithmetic model 13b. This allows the cumulative tire damage estimation system 100 to improve the precision of estimation of the cumulative damage by using the information on the tire inflation pressure under the use condition of the tire 7.

Further, the damage calculation unit 13 calculates the cumulative damage by inputting the number of times that the measured acceleration exceeds the specified acceleration to the arithmetic model 13b. This allows the cumulative tire damage estimation system 100 to improve the precision of estimation of the cumulative damage by using the information on the acceleration measured in the tire 7 under the use condition of the tire and the acceleration of the vehicle.

Further, the damage calculation unit 13 calculates the cumulative damage by inputting an amount derived from multiplying a difference between the measured tire temperature and the specified tire temperature by the travel distance to the arithmetic model 13b. This allows the cumulative tire damage estimation system 100 to improve the precision of estimation of the cumulative damage by using the information on the temperature of the tire 7 under the use condition of the tire 7.

The arithmetic model generation system 110 is provided with the vehicle information acquisition unit 12, the damage calculation unit 13, and the learning processing unit 21. The vehicle information acquisition unit 12 acquires the physical quantity measured by the sensor provided in the tire 7 mounted on the vehicle and the information on travel distance of the vehicle. The damage calculation unit 13 includes the arithmetic model 13b for calculating the cumulative damage incurred by the tire 7 based on the input information and calculates the cumulative damage of the tire 7 by inputting the physical quantity and the information on travel distance acquired by the vehicle information acquisition unit 12 to the arithmetic model 13b. The learning processing unit 21 trains the arithmetic model 13b by comparing the detail of maintenance of the tire 7 determined based on the cumulative damage calculated by the damage calculation unit 13 with the maintenance detail obtained by inspecting the tire 7. This allows the arithmetic model generation system 110 to estimate the cumulative damage of the tire 7 with a high precision and generate the arithmetic model 13b capable of improving the properness of maintenance detail.

The cumulative tire damage estimation method is provided with a vehicle information acquisition step and a damage calculation step. The vehicle information acquisition step acquires the physical quantity measured by the sensor provided in the tire 7 mounted on the vehicle and the information on travel distance of the vehicle. The damage calculation step calculates the cumulative damage of the tire 7 by inputting the physical quantity and the information on travel distance acquired by the vehicle information acquisition step to the arithmetic model 13b for calculating the cumulative damage incurred by the tire 7 based on the input information. According to this method, the cumulative damage of the tire 7 can be estimated by using the physical quantity measured in the tire 7 and the travel distance of the vehicle, and the properness of determination on maintenance detail can be improved.

Described above is an explanation based on an exemplary embodiment. The embodiments are intended to be illustrative only and it will be understood to those skilled in the art that variations and modifications are possible within the claim scope of the present invention and that such variations and modifications are also within the claim scope of the present invention. Therefore, the description in this specification and the drawings shall be treated to serve illustrative purposes and shall not limit the scope of the invention.

7 tire, 12 vehicle information acquisition unit, 13 damage calculation unit, 13b arithmetic model, 21 learning processing unit, 72atemperature sensor (sensor), 72b pressure sensor (sensor), 100cumulative tire damage estimation system, 110 arithmetic model generation system

The present invention relates to a cumulative tire damage estimation system, an arithmetic model generation system, and a cumulative tire damage estimation method for estimating a cumulative damage incurred by a tire mounted on a vehicle.

## Claims

1. A cumulative tire damage estimation system (100) comprising:
a tire (7) that is mounted on a vehicle;
an arithmetic model (13b) for calculating an estimated cumulative damage of the tire (7) based on a tire identification information, a tire measurement information and a vehicle measurement information; wherein,
the tire identification information is corresponding to each tire, the tire measurement information is measured by a sensor (72a, 72b) provided in the tire (7), and the vehicle measurement information is measured by a sensor (71a, 71b, 71c) provided in the vehicle.

2. The cumulative tire damage estimation system (100) according to claim 1, wherein
the sensor (72a, 72b) provided in the tire (7) is a pressure sensor (72b) for measuring an inflation pressure of the tire (7), and further comprising,
a pre-processing unit (13a) that calculates first predictor variable derived from multiplying a difference between the inflation pressure measured by the pressure sensor (72b) and a specified inflation pressure by the travel distance, and
the arithmetic model (13b) calculates the estimated cumulative damage of the tire (7) by using the first predictor variable calculated by the pre-processing unit (13a) .

3. The cumulative tire damage estimation system (100) according to claim 1 or 2, wherein
the sensor (71a, 71b, 71c) provided in the vehicle is an acceleration sensor (71c) for measuring an acceleration of the vehicle or the tire (7), and further comprising,
a pre-processing unit (13a) that calculates second predictor variable derived from a number of times that the acceleration measured by the acceleration sensor (71c) exceeds a specified acceleration, and
the arithmetic model (13b) calculates the estimated cumulative damage of the tire (7) by using the second predictor variable calculated by the pre-processing unit (13a) .

4. The cumulative tire damage estimation system (100) according to any one of claims 1 through 3, wherein
the sensor (72a, 72b) provided in the tire (7) is a temperature sensor (72a) for measuring a temperature of the tire (7), and further comprising,
a pre-processing unit (13a) that calculates third predictor variable derived from multiplying a difference between the temperature measured by the temperature sensor (72a) and a specified tire temperature by the travel distance, and
the arithmetic model (13b) calculates the estimated cumulative damage of the tire (7) by using the third predictor variable calculated by the pre-processing unit (13a) .

5. The cumulative tire damage estimation system (100) according to any one of claims 1 through 4, further comprising,
a maintenance determination unit (13c) that determines a detail of maintenance of the tire (7) based on the estimated cumulative damage of the tire (7) calculated by the arithmetic model (13b).

6. The cumulative tire damage estimation system (100) according to claim 5, wherein
the detail of maintenance of the tire (7) is one of tire rotation, retreading, and disposal.

7. The cumulative tire damage estimation system (100) according to any one of claims 1 through 4, wherein
the arithmetic model (13b) calculates the estimated cumulative damage of the tire (7) by using a position of attachment of the tire (7) in the vehicle.

8. The cumulative tire damage estimation system (100) according to any one of claims 1 through 4 or 7, wherein
the arithmetic model (13b) calculates the estimated cumulative damage of the tire (7) by using a load applied to the tire (7).

9. An arithmetic model generation system (110) comprising:
a tire (7) that is mounted on a vehicle;
an arithmetic model (13b) for calculating an estimated cumulative damage of the tire (7) based on a tire identification information, a tire measurement information and a vehicle measurement information, wherein
the tire identification information is corresponding to each tire, the tire measurement information is measured by a sensor (72a, 72b) provided in the tire (7), and the vehicle measurement information is measured by a sensor (71a, 71b, 71c) provided in the vehicle; and
a learning processing unit (21) that trains a detail of maintenance based on the estimated cumulative damage of the tire (7) calculated by the arithmetic model (13b) and an inspection result obtained by inspecting the tire (7).

10. A cumulative tire damage estimation method comprising:
an information acquiring step that acquires a tire measurement information measured by a sensor (72a, 72b) provided in the tire (7) and a vehicle measurement information including at least travel distance of the vehicle measured by a sensor (71a, 71b, 71c) provided in the vehicle; and
a damage calculation step that calculates an estimated cumulative damage of the tire (7) by inputting at least one of the tire measurement information and the vehicle measurement information to an arithmetic model (13b).

11. A cumulative tire damage estimation method according to claim 10, further comprising:
a determination step that determines a detail of maintenance of the tire (7) based on the estimated cumulative damage of the tire (7) calculated by the arithmetic model (13b) .
